# EUROPÄISCHE PATENTSCHRIFT

(11) **EP 1 636 059 B1**
(45) Veröffentlichungstag und Bekanntmachung des Hinweises auf die Patenterteilung: **15.02.2012**
(21) Anmeldenummer: 04736732.1
(22) Anmeldetag: 14.06.2004
(51) Int. Cl.: B60K 6/52

(54) **FEUERWEHRLÖSCHFAHRZEUG MIT EINEM ANTRIEBSSYSTEM, SOWIE VERFAHREN ZUR STEUERUNG DES ANTRIEBSSYSTEMS**
FIRE ENGINE WITH DRIVE SYSTEM AND METHOD FOR CONTROLLING SAID DRIVE SYSTEM
AUTOPOMPE AVEC SYSTEME D'ENTRAINEMENT, ET PROCEDE DE COMMANDE DU SYSTEME D'ENTRAINEMENT

(30) Priorität: 25.06.2003 AT 9782003
(43) Veröffentlichungstag der Anmeldung: 22.03.2006
(73) Patentinhaber: Rosenbauer International Aktiengesellschaft, 4060 Leonding (AT)
(72) Erfinder: MIKOTA, Josef, A-4040 Linz (AT); AICHINGER, Rudolf, A-4331 Naarn (AT); WAGNER, Stefan, Josef, A-4020 Linz (AT)
(74) Vertreter: Ofner, Clemens
(86) Internationale Anmeldenummer: PCT/AT2004/000204
(87) Internationale Veröffentlichungsnummer: WO 2004/113108

(56) Entgegenhaltungen:
- EP-A- 0 753 423
- WO-A-97/08439
- DE-A- 19 934 790
- US-A1- 2001 022 245

## Beschreibung

Die Erfindung betrifft ein Feuerwehrlöschfahrzeug mit einem Antriebssystem sowie ein Verfahren zur Steuerung eines Antriebssystems eines Feuerwehrlöschfahrzeuges, wie diese in den Oberbegriffen der Ansprüche 1 und 9 beschrieben sind.

Es sind im Stand der Technik Antriebssysteme bekannt, bei denen ein Drehmomentaufnehmer wie z.B. eine Kreiselpumpe mechanisch an eine Antriebseinrichtung wie einem Verbrennungsmotor gekoppelt ist, wobei diese Kopplung beispielsweise über einen mittels einem Getriebe vom Hauptantrieb gesplitteten Nebenantrieb erfolgt, und bei denen die durch den Verbrennungsmotor abgegebene mechanische Leistung durch die am Drehmomentaufnehmer benötigte Drehzahl bzw. Leistung bestimmt wird. Die Leistungsvorgabe an der Antriebseinrichtung erfolgt dabei durch einen Lastgeber zur Steuer- und oder Regelung der Drehzahl der Antriebseinrichtung. Nachteilig ist es bei solchen Antriebssystemen, dass bei einem zusätzlich zum Drehmomentaufnehmer an die Antriebseinrichtung gekoppelten, weiteren Drehmomentaufhehmer, insbesondere einem Generator, dieser direkt den Drehzahlschwankungen in Abhängigkeit der am ersten Drehmomentaufnehmer benötigten Leistung unterliegt. Da die Drehzahl der Antriebseinrichtung nicht konstant gehalten werden kann ist eine kontrollierte Energieerzeugung mit dem in Art eines "passiven" Drehmomentaufnehmers im Antriebssystem angeordneten Generators, der nicht in die Steuerung bzw. Regelung der Antriebseinrichtung eingreift, nicht möglich. Ein Betrieb von elektrischen Verbrauchern über einen solchen mit der Antriebseinrichtung gekoppelten Generator ist somit aufgrund von schwankenden, elektrischen Kenngrößen der erzeugten elektrischen Energie großteils nicht möglich, sodass bisher zum Betrieb von Generatoren eigenständige Antriebsmotoren verwendet wurden, wodurch in einem Kraftfahrzeug durch den zusätzlichen Motor ein hoher Bauteil- und Kostenaufwand erforderlich war.

Weiters sind im Stand der Technik bereits Antriebssysteme bekannt, bei denen elektrische Verbraucher über eine Motor/Generatorkopplung mit elektrischer Energie versorgt werden. Beispielsweise ist aus der DE 195 02 224 C1 ein serieller Hybridantrieb, insbesondere für ein Kraftfahrzeug, bekannt, der einen Verbrennungsmotor, einen mechanisch an diesen gekoppelten Generator, eine elektronische Schaltung umfassend einen Gleichrichter und einen Wechselrichter, sowie einen dem Wechselrichter nachgeschalteten elektrischen Antriebsmotor umfasst. Bei derartigen Antriebssystemen erfolgten Steuerung und/oder Regelung des Verbrennungsmotors bzw. der elektronischen Schaltung in Abhängigkeit des an der Ausgangsseite der elektronischen Schaltung angeschlossenen, einzigen elektrischen Verbrauchers und ein Betrieb von zwei mit dem Verbrennungsmotor gekoppelten Drehmomentaufnehmern ist nicht möglich.

In der WO 97/08439 wird ein Antriebssystem offenbart, das zum Antrieb eines Kraftfahrzeugs eingesetzt wird und welches einen Antriebsmotor (1), eine elektrische Maschine (4) und zumindest eine Kurzzeit-Batterie (11) umfasst. Der Antriebsmotor eines Kraftfahrzeuges ist üblicherweise als Verbrennungskraftmaschine ausgeführt und wird hinsichtlich seiner Leistungsfähigkeit meist auf die zu erwartende Maximalbelastung ausgelegt. Dadurch ergibt sich bei einem typischen Einsatz ein Betrieb in einem mittleren Leistungsbereich, in dem eine Verbrennungskraftmaschine einen geringeren Wirkungsgrad hat. Das beschriebene System setzt nun zwei Antriebsmotoren ein, wobei der erste Antriebsmotor eine Verbrennungskraftmaschine mit geringerer Leistung ist und der zweite Antriebsmotor als elektrische Maschine ausgebildet ist. Durch die Kombination dieser beiden Antriebsmotoren erreicht ein derart ausgebildetes Antriebssystem eine Steigerung des Gesamtwirkungsgrads gegenüber einem Antriebssystem, welches nur eine Verbrennungskraftmaschine aufweist. Durch die geringere Leistungsfähigkeit der Verbrennungskraftmaschine wird diese die überwiegende Betriebszeit in einem höheren, energetisch günstigeren Leistungsbereich betrieben. Zur Abdeckung von Leistungsspitzen, wie sie z.B. beim Anfahren vorkommen, wird die mit dem Antriebsstrang drehverbundene elektrische Maschine drehmomentsteigernd in Betrieb genommen. Zusammen mit der Verbrennungskraftmaschine wird so ausreichend Leistung für ein schnelles Vorankommen bereitgestellt. Beim Abbremsen des Kraftfahrzeuges wird die freiwerdende kinetische Energie nicht wie üblicherweise in Wärme umgewandelt, sondern von der als Generator arbeitenden elektrischen Maschine in elektrische Energie umgewandelt und mittels der angeschlossenen elektronischen Schaltung (14) in einem Kurzzeit-Batteriespeicher (11) zwischengespeichert. Beim nächsten erhöhten Leistungsbedarf wird die gespeicherte Energie aus dem Batterie-Zwischenspeicher abgerufen und über die elektronische Schaltung an die elektrische Maschine, die nun wieder als Motor arbeitet, abgegeben. Die elektronische Schaltung sowie die Steuerung (17) sind dabei wesentlich an der Verbesserung des Wirkungsgrads beteiligt, gilt es doch, das optimale Zusammenspiel der Verbrennungskraftmaschine und der elektrischen Maschine zu steuern und die Betriebsart der elektrischen Maschine festzulegen.

In der DE 199 34 790 A1 wird ebenfalls ein Antriebssystem für Kraftfahrzeuge offenbart, das neben einem Hauptantriebsstrang (10), mit dem eine Verbrennungskraftmaschine (13) kuppelbar verbunden ist, einen zweiten Nebenantriebsstrang (11) umfasst, an dem ebenfalls kuppelbar ein zweites Nebenantriebsaggregat (22), vorzugsweise eine Verbrennungskraftmaschine geringerer Leistung, eine Starter/Generator (20), sowie gegebenenfalls weitere anzutreibende Nebenaggregate (19) angebracht sind. Die beiden Antriebsstränge sind über ein Zwischengetriebe, welches eine Übersetzung aufweisen kann, miteinander drehverbunden. Bei diesem Antriebssystem wird eine Steigerung des Wirkungsgrads dadurch erreicht, dass die erste Verbrennungskraftmaschine bei nur geringer Leistungsanforderung abgeschaltet wird, beispielsweise in Wartezeiten vor einer Ampel. Bei abgeschalteter erster Verbrennungskraftmaschine übernimmt der zweite Nebenaggregatantrieb die Versorgung von permanent Energie benötigenden Nebenaggregaten, beispielsweise einer Klimaanlage oder der Beleuchtung, mit mechanischer bzw. elektrischer Energie. Je nach geforderter Leistung an der Antriebsachse (17), beispielsweise beim Beschleunigen, werden die beiden Antriebsaggregate bzw. der Starter/Generator über schaltbare Kupplungen an die Antriebsstränge gekoppelt und liefern so die geforderte Leistung. Beim Bremsen kann die frei werdende Energie durch Betrieb des Starter/Generators als Generator, in einer Batterie zwischengespeichert werden und steht für einen nachfolgenden erhöhten Leistungsbedarf und/oder zur Versorgung der elektrischen Verbraucher zur Verfügung.

Die EP 0 753 423 A1 offenbart ein Feuerwehrfahrzeug welches mindestens zwei beidseits einer Längsachse des Fahrzeugs angeordnete Antriebsmotoren (23,24) umfasst und bei dem weiters über einen Nebenabtrieb (36) eine Löschmittelpumpe (39) und/oder ein Generator angekuppelt ist. Feuerlöschfahrzeuge sind üblicherweise dazu ausgebildet, große Gewichtslasten, beispielsweise einen mit Löschmittel befüllten Tank, möglichst schnell von einer Warteposition zum Einsatzort zu bewegen. Zur Bereitstellung der dafür erforderlichen hohen Antriebsleistung bei gleichzeitiger Reduktion des Volumens zur Unterbringung des Motors, ist das geoffenbarte Feuerwehrfahrzeug mit mindestens zwei Motoren ausgestattet, wobei diese Motoren vorteilhaft als Seriendieselmotoren ausgebildet sind. Zur besseren Gewichtsverteilung und zur Erreichung eines möglichst niedrigen Schwerpunkts, werden die beiden Motoren beidseits einer Längsachse des Fahrzeuges, sowie unterhalb einer Ladefläche des Fahrzeugaufbaus angeordnet. Zur Bereitstellung von Löschmittel und/oder elektrischer Energie während eines bauartgemäßen Einsatzes, sind eine Löschmittelpumpe und/oder ein Generator mit einem Nebenantriebsstrang gekuppelt. Dieser Nebenantriebsstrang wird über einen Leistungsverzweiger von einer der beiden Verbrennungskraftmaschinen angetrieben.

Die Aufgabe der Erfindung ist es ein Antriebssystem sowie ein Verfahren zur Steuerung eines Antriebssystems für ein Feuerwehrlöschfahrzeug zu schaffen, mit dem ein verbesserter Betrieb von mechanischen und elektrischen Verbrauchern ermöglicht wird.

Die Aufgabe der Erfindung wird eigenständig durch die im Kennzeichenteil des Anspruches 1 und ebenfalls eigenständig durch die im Kennzeichenteil des Anspruches 8 angegebenen Merkmale gelöst. Von Vorteil ist es dabei, dass Schwankungen der vom Generator abgegebenen elektrischen Kenngrößen ausgeglichen bzw. die Werte der Kenngrößen gesteuert und/oder geregelt werden können und an der Ausgangsseite der elektronischen Schaltung ein konstanter und bestimmbarer Energiefluss erreicht werden kann. Die durch das Antriebssystem ausgangsseitig an der elektrischen Schaltung an einen Verbraucher abgebbare Energie ist somit bis zu einem gewissen Grad unabhängig von der abgegebenen, mechanischen Leistung der Antriebseinrichtung bereitstellbar, wodurch erstmals der steuer- bzw. regelbare Betrieb von elektrischen Verbrauchern bei gleichzeitig durch einen mechanischen Verbraucher bzw. Drehmomentaufnehmer verursachten Drehzahlschwankungen der Antriebseinrichtung ermöglicht wird. Dadurch, dass zum steuer- bzw. regelbaren Betrieb von mechanischen und elektrischen Verbrauchern nunmehr nur noch eine Antriebseinrichtung benötigt wird, ist ein kostengünstiger, kompakter und gewichtsreduzierter Aufbau des Antriebssystems möglich, wobei auch die Wartung des Antriebssystems vereinfacht und der Wartungsaufwand bzw. Wartungskosten reduziert werden. Weiters kann eine durch die Verwendung nur einer Antriebseinrichtung das Einbauvolumen des Antriebssystems verringert werden und z.B. somit das Beladevolumen eines Feuerwehrlöschfahrzeuges vergrößert werden.

Weitere vorteilhafte Ausgestaltungen sind in den kennzeichnenden Teilen der Ansprüche 2 bis 8 bzw. 10 beschrieben, wobei die Vorteile hierzu der Figurenbeschreibung zu entnehmen sind.

Zum besseren Verständnis wird die Erfindung gemäß den in den Figuren schematisch dargestellten Zeichnungen näher erläutert.

Es zeigen:
- Fig. 1: eine Ausführungsvariante eines erfindungsgemäßen Antriebssystems;
- Fig. 2: eine weitere, mögliche Ausführungsvariante eines erfindungsgemäßen Antriebssystems;
- Fig. 3: eine mögliche Ausbildung einer elektronischen Schaltung im Antriebssystem zur Steuer- bzw. Regelung der elektrischen Kenngrößen der vom Generator erzeugten elektrischen Energie.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzehmerkmale oder Merkmalskombinationen aus den gezeigten und beschriebenen unterschiedlichen Ausführungsbeispielen für sich eigenständige, erfinderische oder erfindungsgemäße Lösungen darstellen.

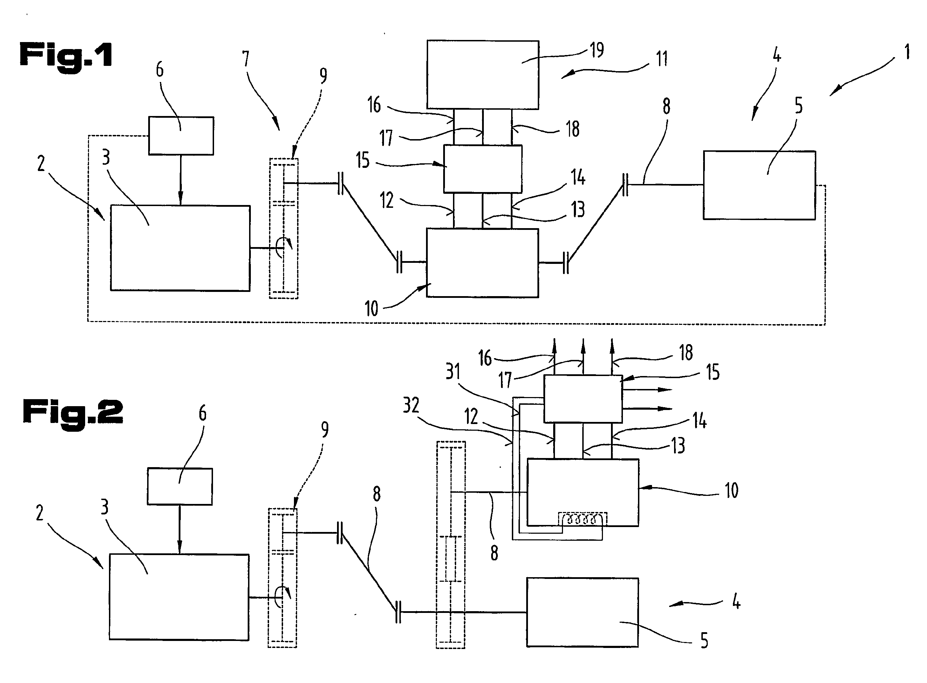

In der Fig. 1 ist ein erfmdungsgemäßes Antriebssystem 1 dargestellt, welches eine mechanische Antriebseinrichtung 2, die insbesondere durch einen Verbrennungsmotor 3 wie z.B. einem Dieselmotor gebildet ist, einen Drehmomentaufnehmer 4, der insbesondere durch eine Rotations- bzw. Kreiselpumpe 5 gebildet ist, und einen Lastgeber 6 umfasst. Der Drehmomentaufnehmer 4 ist über eine Einrichtung 7 zur Drehmomentübertragung, die vorzugsweise durch ein oder mehrere Wellen 8, beispielsweise Gelenkwellen, und gegebenenfalls ein oder mehrere Übersetzungsstufen bzw. Getriebe 9 gebildet ist, mechanisch an die Antriebseinrichtung 2 gekoppelt, sodass über die durch diese abgegebene mechanische Leistung, insbesondere Drehzahl, die Antriebsleistung am ersten Drehmomentaufnehmer 4 bestimmt wird. Das gezeigte Antriebssystem 1 ist dabei vorzugsweise ausgehend von einem Nebenantrieb des Getriebes 9 aufgebaut. Zur Vorgabe der Drehzahl der Antriebseinrichtung 2 ist diese mit dem Lastgeber 6 wirkungsverbunden, wobei der Lastgeber 6 in Abhängigkeit der am Drehmomentaufnehmer 4 eingangsseitig benötigten, mechanischen Antriebsleistung die Drehzahl der Antriebseinrichtung 2 kontrolliert bzw. regelt.

Der Lastgeber 6 kann dabei beispielsweise als elektronische oder mechanische Steuereinrichtung bzw. eine Kombination daraus gebildet sein und ist vorzugsweise als Drehzahlgeber zur Vorgabe der Drehzahl der Antriebseinrichtung 2 ausgebildet. Die Vorgabe bzw. Regelung dieser Drehzahl der Antriebseinrichtung 2 durch den Lastgeber 6 kann z.B. über eine Sollwertvorgabe oder einen Soll/Istwertvergleich der Drehzahl bzw. Antriebsleitung am Drehmomentaufnehmer 4 - Leitung zur Parameterrückführung an den Lastgeber strichliert in Fig. 1 dargestellt - oder in Abhängigkeit einer an einem weiteren Neben- bzw. Hauptantrieb erforderlichen Antriebsleistung, z.B. bei einer zu erhöhenden Fahrtgeschwindigkeit eines Fahrzeugs, erfolgen. Die Festlegung eines Sollwertes kann dabei über beliebig aus dem Stand der Technik bekannte Eingabe- bzw. Betätigungselemente erfolgen.

Es sei angemerkt, dass das Antriebssystem 1 in Feuerwehrlöschfahrzeugen besonders vorteilhaft ist, da bei diesen Fahrzeugen ein oder mehrere Drehmomentaufnehmer 4 wie z.B. Kreiselpumpen 5 mit ausreichender, mechanischer Antriebsleistung versorgt werden müssen und gleichzeitig über einen Generator 10 eine Energieversorgung von elektrischen Verbrauchern 11 notwendig ist. Beispielsweise wird bei einem Löschfahrzeug dessen Kreiselpumpe 5, insbesondere Löschmittelpumpe, über den Verbrennungsmotor 3 mechanisch angetrieben und es wird die Drehzahl abhängig von der erforderlichen Pumpenleistung, die eine veränderbare Größe darstellt, geregelt, wobei erfindungsgemäß über den Generator 10, der an den Verbrennungsmotor 3 mechanisch gekoppelt ist und nicht in dessen Drehzahl-Steuer- bzw. Regelung einbezogen wird, gleichzeitig elektrische Verbraucher 11, beispielsweise Beleuchtung, elektrische Motoren, Pumpen, usw., versorgt werden können, wobei auch Verbraucher 11 mit hoher Leistungsaufnahme mit ausreichend Energie versorgbar sind. Es ist auch möglich, dass an die elektrische Ausgangsseite der Schaltung 15 weitere Frequenzumrichter angeschlossen sind, die z.B. als standardisierte Frequenzumrichtermodule gebildet sind um an diese ausgangsseitig angeschlossene Verbraucher 11 individuell mit der benötigten Energie zu versorgen.

Es ist nun zur Versorgung von elektrischen Verbrauchern 11 der Generator 10, welcher einen weiteren Drehmomentabnehmer im Antriebssystem 1 darstellt, mit der Antriebseinrichtung 2 über die Einrichtung 7 zur Bewegungsübertragung, insbesondere die Welle 8 und gegebenenfalls über einen Nebenantrieb an das zumindest eine Getriebe 9, mechanisch gekoppelt, sodass die durch den Generator 10 abgegebene elektrische Energie bzw. Leistung direkt von der durch die Antriebseinrichtung 2 abgegebenen mechanischen Leistung, insbesondere der Drehzahl, abhängig ist, wobei die Drehzahl der Antriebseinrichtung 2, wie bereits erwähnt, durch den ersten Drehmomentaufnehmer 4 bestimmt wird und sich Drehzahlschwankungen in Form von proportional zu diesen schwankenden, elektrischen Kenngrößen, insbesondere Spannung, Strom, Frequenz, usw., der durch den Generator 10 abgegebenen elektrischen Energie äußern.

Um dieses Problem zu lösen und elektrische Verbraucher 11 mit einem konstanten bzw. steuer- und/oder regelbaren Energiefluss zu versorgen sind die elektrischen Ausgänge, beispielsweise Ausgangsklemmen, des Generators 10 z.B. über energieführende Leitungen 12 bis 14 und einem Nulleiter mit einer elektronischen Schaltung 15, insbesondere einer Leistungselektronik, verbunden, wobei diese Schaltung 15 zur Steuer- und/oder Regelung der elektrischen Kenngrößen, wie z.B. Spannung, Strom, Frequenz usw., ausgebildet ist und die Energie der durch die Schaltung 15 bestimmbaren Kenngrößen an dieser ausgangsseitig bereitgestellt wird und aufgrund dieser kontrollierbaren Betriebsverhältnisse elektrische Verbraucher 11 betrieben werden können. Beispielsweise kann über Leitungen 16 bis 18 bzw. dem Nullleiter an die Schaltung 15 ausgangsseitig ein Drehstrommotor 19, insbesondere ein Asynchrondrehstrommotor, angeschlossen sein, dessen Drehzahl durch entsprechende Steuer- und/oder Regelung der elektrischen Kenngrößen durch die Schaltung 15 festgelegt wird, wobei die Drehzahl am Drehstrommotor 19 im Wesentlichen von der Drehzahl der mechanischen Antriebseinrichtung 2 unabhängig ist.

Vorzugsweise wird ein Generator 10 vom Typ der Synchrondrehstrommaschinen verwendet, sodass auch Verbraucher 11 mit hohem Blindleistungsanteil versorgt werden können, wobei die verwendeten Synchrondrehstrommaschinen eine variable Antriebsdrehzahl aufweisen und beispielsweise eine Spreizung zwischen minimaler und maximaler Drehzahl von nₘᵢₙ:nₘₐₓ=1:3 aufweisen und die bevorzugt ein regelbares Erregerfeld aufweisen, wobei selbstverständlich auch andere Generatortypen verwendbar sind.

Bei der in der Fig. 1 dargestellten Ausführungsvariante des Antriebssystems 1 ist der Generator 10 zur elektrischen Energieerzeugung eingangsseitig mechanisch an die Antriebseinrichtung 2 und ausgangsseitig mechanisch an den Drehmomentaufnehmer 4 gekoppelt, sodass der Generator 10 in Art eines Generatorzwischenstückes, welches zwischen Antriebseinrichtung 2 und Drehmomentaufnehmer 4 geschaltet ist, ausgebildet ist. Eine weitere mögliche Ausführungsvariante des Antriebssystems 1 ist in der Fig. 2 dargestellt, wobei hierbei der Generator 10 als Endstück gebildet ist, dass gegebenenfalls über ein oder mehrere Getriebe 9 mechanisch an die Antriebseinrichtung 2 gekoppelt ist und der Generator 10 in diesem Fall nicht mit dem Drehmomentaufnehmer 4 gekoppelt ist.

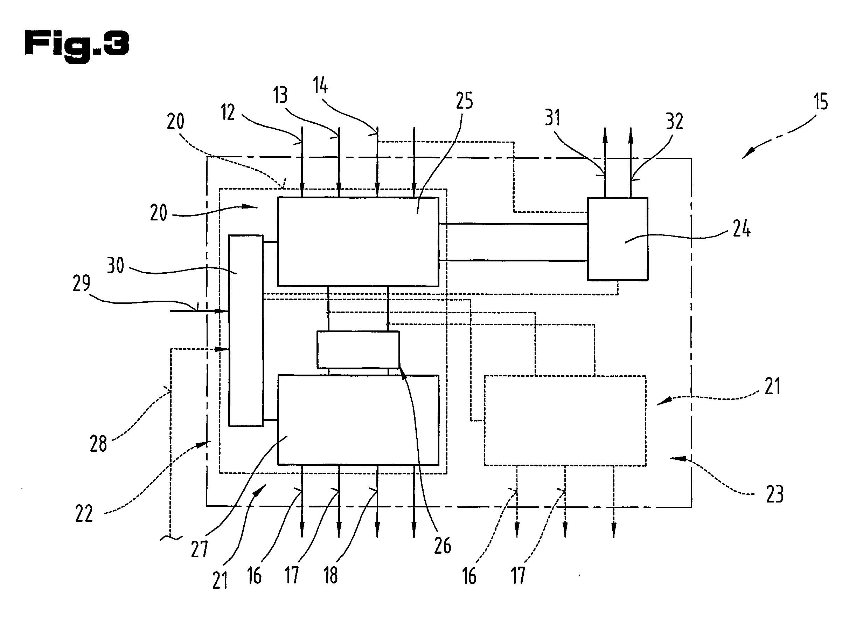

In Fig. 3 ist eine mögliche Ausführungsvariante der elektronischen Schaltung 15 dargestellt, die aus ein oder mehreren Frequenzumrichtermodulen 20, 21 besteht, und über welche die elektrischen Kenngrößen der ausgangsseitig über die Schaltung 15 abgegebenen Energie bestimmbar sind. Beispielsweise ist das Frequenzumrichtermodul 20 als Drehzahlstellmodul 22 zur Vorgabe einer Drehzahl an einem über die elektrischen Leitungen 16 bis 18 bzw. dem Nullleiter an die Schaltung angeschlossenen Drehstrommotor 19, insbesondere Asynchron-Drehstrommotor, und das Frequenzumrichtermodul 20 als Spannungsabgabemodul 23 zur Bereitstellung einer konstanten Ausgangsspannung, wobei es sich hierbei um eine Normspannungsausgang von 230 oder 400 V bei 50 Hz bzw. 60 Hz handeln kann, usw., vorgesehen.

Die Frequenzumrichtermodule 20, 21 können z.B. einen netzseitigen Stromrichter, einen lastseitigen Stromrichter und vorzugsweise einen zwischen diese geschalteten Energiespeicher 26, z.B. einen Gleichspannungs- oder Gleichstromzwischenkreis mit Speicherelementen wie einer Kapazität bzw. einer Induktivität, aufweisen, wobei der netzseitige Stromrichter durch eine Gleichrichterschaltung 25 gebildet sein kann, die vorzugsweise über den Energiespeicher 26 mit dem als Wechselrichterschaltung 27 gebildeten, lastseitigen Stromrichter zur Bereitstellung vorgebbarer Kenngrößen, insbesondere Spannung, Frequenz, Strom, usw., an den Ausgängen der Schaltung 15 verbunden ist. Die Steuer- und/oder Regelung der elektrischen Kenngrößen über die Frequenzumrichtermodule 20, 21 kann dabei durch einen Soll-/Istwertvergleich erfolgen, indem eine Istwert-Rückführung von ein oder mehreren Parametern der an die Frequenzumuchtermodule 20, 21 angeschlossenen Verbraucher 11, beispielsweise über eine Leitung 28 an die Schaltung 15 erfolgt. Entsprechend der z.B. über eine Sollwertvorgabe 29 vorgegebenen Sollwerte und Istwerte der rückgeführten Parameter, beispielsweise der Ist-Drehzahl eines Drehstrommotors, Ist-Ausgangsspannung, usw., kann eine Regelung der Frequenzumrichtermodule 20, 21, insbesondere der Wechselrichterschaltungen 27, für eine Annäherung an den festgelegten bzw. festlegbaren Sollwerte der elektrischen Kenngrößen erfolgen.

Im Allgemeinen kann die Schaltung 15 oder jedes Frequenzumrichtermodul 20, 21 eine elektronische Steuereinrichtung 30 zur Durchführung von logischen Operationen zur Auswertung der dieser zugeführten Soll- und Istwerte und zur Durchführung der Steuerungsvorgänge der einzelnen Schaltungsbauteile, insbesondere der Stromrichter, aufweisen. Es sei die Möglichkeit angemerkt, das anstelle von Frequenzumrichtermodulen 20, 21 andere Schaltungsanordnungen zur Veränderung der elektrischen Kenngrößen, z.B. Transformatorschaltungen, zum Einsatz kommen können.

Die Schaltung 15 kann weiters ein Generatorregelmodul 24 umfassen, über dass das Erregerfeld des als Drehstromgenerator gebildeten Generators 10 steuer- bzw. regelbar ist, wobei hierzu Steuerleitungen 31, 32 mit der Erregerwicklung des Generators 10 verbunden sind, wie dies schematisch in Fig. 2 dargestellt ist. Somit kann die Spannungscharakteristik an den elektrischen Ausgängen des Generators 10 zusätzlich beeinflusst werden, wodurch eine weitreichendere Variation der Eingangsspannung und somit auch der Ausgangsspannung bzw. Energie an der Schaltung 15 möglich ist.

Der Ordnung halber sei abschließend darauf hingewiesen, dass zum besseren Verständnis des Aufbaus des Antriebssystems 1 dieses bzw. dessen Bestandteile teilweise unmaßstäblich und/oder vergrößert und/oder verkleinert dargestellt wurden.

### Bezugszeichenaufstellung

- 1: Antriebssystem
- 2: Antriebseinrichtung
- 3: Verbrennungsmotor
- 4: Momentabnehmer
- 5: Pumpe

- 6: Lastgeber
- 7: Einrichtung
- 8: Welle
- 9: Getriebe
- 10: Generator

- 11: Verbraucher
- 12: Leitung
- 13: Leitung
- 14: Leitung
- 15: elektronische Schaltung

- 16: Leitung
- 17: Leitung
- 18: Leitung
- 19: Drehstrommotor
- 20: Frequenzumrichtermodul

- 21: Frequenzumrichtermodul
- 22: Drehzahlstellmodul
- 23: Spannungsabgabemodul
- 24: Generatorregelmodul
- 25: Gleichrichterschaltung

- 26: Energiespeicher
- 27: Wechselrichterschaltung
- 28: Leitung
- 29: Sollwertvorgabe
- 30: Steuereinrichtung

- 31: Steuerleitung
- 32: Steuerleitung

## Patentansprüche

1. Feuerwehrlöschfahrzeug mit einem Antriebssystem (1) zumindest umfassend eine mechanische Antriebseinrichtung (2), insbesondere einen Verbrennungsmotor (3), eine mechanisch an die Antriebseinrichtung (2) gekoppelte und von dieser angetriebene Löschmittelpumpe, einen mit der mechanischen Antriebseinrichtung (2) wirkungsverbunden und mit der Löschmittelpumpe über eine Leitung verbundenen Drehzahlgeber zur Steuerung bzw. Regelung der Drehzahl der Antriebseinrichtung (2) in Abhängigkeit der benötigten mechanischen Antriebsleistung an der Löschmittelpumpe, einen Generator (10), der mechanisch an die Antriebseinrichtung (2) gekoppelt ist und durch diese angetrieben wird und nicht in deren Drehzahl-Steuerung und -Regelung einbezogen ist, und eine elektronische Schaltung (15), die eingangsseitig mit dem Generator (10) elektrisch verbunden ist und an der ausgangsseitig elektrische Verbraucher (11) angeschlossen sind, **dadurch gekennzeichnet, dass** die elektronische Schaltung (15) zumindest zur Steuer- und Regelung der elektrischen Kenngrößen, beispielsweise Spannung, Strom, Frequenz, einer ausgangsseitig an der elektronischen Schaltung (15) bereitzustellenden elektrischen Energie ausgebildet ist, um die elektrischen Verbraucher (11) bei Schwankungen der vom Generator (10) abgegebenen elektrischen Kenngrößen mit einem konstanten bzw. steuer- und regelbaren Energiefluss zu versorgen.

2. Feuerwehrlöschfahrzeug nach Anspruch 1, **dadurch gekennzeichnet, dass** der Generator (10) eine Drehstrommaschine ist, bevorzugt eine Synchrondrehstrommaschine.

3. Feuerwehrlöschfahrzeug nach Anspruch 1 oder 2, **dadurch gekennzeichnet, dass** der Generator (10) mechanisch mit der Antriebseinrichtung (2) und der Löschmittelpumpe über eine Welle (8) zur Bewegungsübertragung gekoppelt ist, und der Generator (10) als Zwischenglied zwischen der Antriebseinrichtung (2) und der Löschmittelpumpe angeordnet ist, oder der Generator (10) der Antriebseinrichtung (2) bzw. der Löschmittelpumpe als Endglied mechanisch nachgeschaltet ist.

4. Feuerwehrlöschfahrzeug nach einem oder mehreren der vorhergehenden Ansprüche, **dadurch gekennzeichnet, dass** ein Erregerfeld des Generators (10) über ein der Schaltung (15) zugeordnetes Generatorregelmodul (24) regelbar ist.

5. Feuerwehrlöschfahrzeug nach einem oder mehreren der vorhergehenden Ansprüche, **dadurch gekennzeichnet, dass** die elektronische Schaltung (15) ein oder mehrere Frequenzumrichtermodule (20, 21) zur Energieversorgung von an die Schaltung (15) anschließbaren elektrischen Verbrauchern (11) umfasst.

6. Feuerwehrlöschfahrzeug nach Anspruch 4, **dadurch gekennzeichnet, dass** das Frequenzumrichtermodul (20, 21) als Drehzahlstellmodul (22) zur Vorgabe einer Drehzahl für einen Drehstrommotor (19) oder als Spannungsabgabemodul (23) zur Bereitstellung einer konstanten Spannung für einen Verbraucher (11) gebildet sind.

7. Feuerwehrlöschfahrzeug nach einem oder mehreren der vorhergehenden Ansprüche, **dadurch gekennzeichnet, dass** zumindest einige der Frequenzumrichtermodule (20, 21) entsprechend einer Sollwertvorgabe, insbesondere durch einen Soll-/ Istwertvergleich, ein oder mehrerer Parameter eines Verbrauchers (11), beispielsweise eine Drehzahl des Drehstrommotors (19), einer Ausgangsspannung, gesteuert bzw. geregelt werden und hierzu vorzugsweise eine Istwert-Rückführung der lastseitig bzw. ausgangsseitig an die Schaltung (15) angebundenen Verbraucher (11) an die Frequenzumrichtermodule (20, 21) über eine Leitung (28) erfolgt.

8. Feuerwehrlöschfahrzeug nach einem oder mehreren der vorhergehenden Ansprüche, **dadurch gekennzeichnet, dass** an die elektronische Schaltung (15), insbesondere an die Frequenzumrichtermodule (20, 21), ausgangsseitig ein oder mehrere weitere Frequenzumrichtermodule gekoppelt sind, an die je zumindest ein elektrischer Verbraucher (11) koppelbar ist.

9. Verfahren zur Steuerung und Regelung eines Antriebssystems (1) eines Feuerwehrlöschfahrzeuges bei dem die abgegebene Drehzahl einer mechanischen Antriebseinrichtung (2) durch einen Lastgeber (6) gesteuert und geregelt wird, wobei die Leistungs- bzw. Drehzahlvorgabe durch den Lastgeber (6) in Abhängigkeit einer mit der Antriebseinrichtung (2) mechanisch gekoppelten Löschmittelpumpe vorgegeben wird bzw. über diesen bestimmbar ist, wobei weiter ein nicht in die Drehzahlregelung bzw. -steuerung der Antriebseinrichtung eingebundener Generator (10) durch die mit diesem mechanisch gekoppelte Antriebseinrichtung (2) angetrieben wird und die am Generator (10) erzeugte elektrische Energie einer elektronischen Schaltung (15) zugeführt wird, wobei mit der elektronischen Schaltung (15) eine elektrische Kenngröße der zugeführten Energie, wie beispielsweise die Spannung, der Strom, die Frequenz, geregelt wird und die Energie an der Ausgangsseite der elektronischen Schaltung (15), die mit ein oder mehreren Verbrauchern (11) verbindbar ist, bereitgestellt wird, sodass die elektrischen Verbraucher (11) bei Schwankungen der vom Generator (10) abgegebenen elektrischen Kenngrößen mit einem konstanten bzw. steuer- und regelbaren Energiefluss versorgt werden.

10. Verfahren nach Anspruch 9, **dadurch gekennzeichnet, dass** das Verfahren mit dem Antriebssystem (1) des Feverwehr löschfahrzeugs nach einem der Ansprüche 1 bis 8 durchgeführt wird.

## Claims

1. Fire engine with a drive system (1) comprising at least one mechanical drive unit (2), in particular an internal combustion engine (3), an extinguisher pump mechanically coupled with the drive unit (2) and driven by it, a speed sensor connected to the mechanical drive unit (2) during operation and connected to the extinguisher pump via a cable in order to control and regulate the speed of the drive unit (2) as a function of the mechanical driving power needed at the extinguisher pump, a generator (10) which is mechanically coupled with the drive unit (2) and is driven by it and is not involved in controlling and regulating the speed thereof, and an electronic circuit (15) which is electrically connected to the generator (10) at the input end and is connected to the electrical consumer (11) at the output end, **characterised in that** the electronic circuit (15) is configured for at least controlling and regulating the electric characteristic variables, for example voltage, current, frequency, of an electrical power to be supplied at the output end from the electronic circuit (15) in order to supply the electrical consumer (11) with a constant and controllable and regulatable energy flow in the event of fluctuations in the electric characteristic variables output by the generator (10).

2. Fire engine as claimed in claim 1, **characterised in that** the generator (10) is a three-phase generator, preferably a synchronous three-phase generator.

3. Fire engine as claimed in claim 1 or 2, **characterised in that** the generator (10) is mechanically coupled with the drive unit (2) and extinguisher pump via a shaft (8) for transmitting motion, and the generator (10) is an intermediate element disposed between the drive unit (2) and extinguisher pump, or the generator (10) is a terminal element mechanically connected downstream of the drive unit (2) and extinguisher pump.

4. Fire engine as claimed in one or more of the preceding claims, **characterised in that** an exciter field of the generator (10) can be regulated by means of a generator regulating module (24) co-operating with the circuit (15).

5. Fire engine as claimed in one or more of the preceding claims, **characterised in that** the electronic circuit (15) comprises one or more frequency convertor modules (20, 21) for supplying energy for electrical consumers (11) which can be connected to the circuit (15).

6. Fire engine as claimed in claim 4, **characterised in that** the frequency convertor module (20, 21) is provided in the form of a speed control module (22) for predefining a speed for a three-phase motor (19) or voltage output module (23) for supplying a constant voltage for a consumer (11).

7. Fire engine as claimed in one or more of the preceding claims, **characterised in that** at least some of the frequency convertor modules (20, 21) are controlled and regulated on the basis of a pre-set desired value, in particular by means of a desired/actual value comparison, one or more parameters of a consumer (11), for example a speed of the three-phase motor (19), or an output voltage, and the actual value of the consumer (11) connected to the load end or output end of the circuit (15) is preferably fed back to the frequency convertor modules (20, 21) via a cable (28) for this purpose.

8. Fire engine as claimed in one or more of the preceding claims, **characterised in that** one or more other frequency convertor modules are coupled with the electronic circuit (15), in particular with the frequency convertor modules (20, 21), at the output end, to each of which an electrical consumer (11) can be connected.

9. Method of controlling and regulating a drive system (1) of a fire engine whereby the output speed of a mechanical drive unit (2) is controlled and regulated by means of a load sensor (6), and the default power or speed is predefined by the load sensor (6) as a function of an extinguisher pump mechanically coupled with the drive unit (2) and can be predefined via the latter, and a generator (10) not involved in controlling and regulating the speed of the drive unit is also driven by the drive unit (2) mechanically coupled with it, and the electrical energy generated at the generator (10) is forwarded to an electronic circuit (15), and an electric characteristic variable of the forwarded energy, for example the voltage, current, frequency, is regulated by means of the electronic circuit (15), and the energy is made available at the output end of the electronic circuit (15) to which one or more consumers (11) can be connected so that the electrical consumers (11) are supplied with a constant and controllable and regulatable flow of energy in the event of fluctuations in the electric characteristic variables output by the generator (10).

10. Method as claimed in claim 9, **characterised in that** the method is implemented by the drive system (1) of the fire engine as claimed in one of claims 1 to 8.

## Revendications

1. Autopompe, comportant un système d'entraînement (1), comprenant au moins un dispositif d'entraînement (2) mécanique, en particulier un moteur à combustion interne (3), une pompe d'extinction couplée mécaniquement au dispositif d'entraînement (2) et actionnée par celui-ci, un capteur de vitesse de rotation, coopérant avec le dispositif d'entraînement (2) mécanique et relié à la pompe d'extinction via une conduite, pour commander ou régler la vitesse de rotation du dispositif d'entraînement (2) en fonction de la puissance d'entraînement mécanique nécessaire au niveau de la pompe d'extinction, un générateur (10), couplé mécaniquement au dispositif d'entraînement (2) et actionné par celui-ci et non intégré dans la commande et le réglage de la vitesse de rotation de celui-ci, et un circuit (15) électronique, dont l'entrée est reliée électriquement au générateur (10) et à la sortie duquel sont raccordés des consommateurs (11) électriques, **caractérisée en ce que** le circuit (15) électronique est réalisé pour le moins pour la commande et le réglage des paramètres électriques, tels que la tension, le courant, la fréquence, d'une énergie électrique à mettre à disposition au niveau du circuit (15) électronique, afin que, en cas de fluctuations des paramètres électriques fournis par le générateur (10), les consommateurs (11) électriques soient alimentés avec un flux d'énergie constant ou pouvant être commandé et réglé.

2. Autopompe selon la revendication 1, **caractérisée en ce que** le générateur (10) est une machine à courant triphasé, de préférence une machine à courant triphasé synchrone.

3. Autopompe selon la revendication 1 ou 2, **caractérisée en ce que** le générateur (10) est couplé mécaniquement au dispositif d'entraînement (2) et à la pompe d'extinction via un arbre (8) pour la transmission du mouvement, et le générateur (10) est agencé en tant qu'organe intermédiaire entre le dispositif d'entraînement (2) et la pompe d'extinction, ou le générateur (10) en tant qu'organe final est monté mécaniquement en aval du dispositif d'entraînement (2) ou de la pompe d'extinction.

4. Autopompe selon une ou plusieurs des revendications précédentes, **caractérisée en ce qu'**un champ d'excitation du générateur (10) peut être réglé par l'intermédiaire d'un module de réglage du générateur (24) associé au circuit (15).

5. Autopompe selon une ou plusieurs des revendications précédentes, **caractérisée en ce que** le circuit (15) électronique comprend un ou plusieurs modules convertisseurs de fréquence (20, 21) pour fournir de l'énergie aux consommateurs (11) électriques pouvant être raccordés au circuit (15).

6. Autopompe selon la revendication 4, **caractérisée en ce que** le module convertisseur de fréquence (20, 21) est réalisé sous forme de module de réglage de la vitesse de rotation (22) pour définir une vitesse de rotation à un moteur à courant triphasé (19) ou sous forme de module de fourniture de tension (23) pour fournir une tension constante à un consommateur (11).

7. Autopompe selon une ou plusieurs des revendications précédentes, **caractérisée en ce qu'**au moins quelques-uns des modules convertisseurs de fréquence (20, 21) sont commandés ou réglés conformément à la définition d'une valeur théorique, en particulier par une comparaison valeur théorique/valeur réelle, à un ou plusieurs paramètres d'un consommateur (11), tel qu'une vitesse de rotation du moteur à courant triphasé (19), à une tension de sortie, et, pour ce faire, est effectué de préférence un renvoi de la valeur réelle des consommateurs (11), raccordés du côté charge ou côté sortie au circuit (15), vers les modules convertisseurs de fréquence (20, 21) via une ligne (28).

8. Autopompe selon une ou plusieurs des revendications précédentes, **caractérisée en ce qu'**au côté sortie du circuit (15) électronique, en particulier aux modules convertisseurs de fréquence (20, 21), sont couplés un ou plusieurs modules convertisseurs de fréquence à chacun desquels peut être couplé au moins un consommateur (11) électrique.

9. Procédé pour la commande et le réglage d'un système d'entraînement (1) d'une autopompe, selon lequel la vitesse de rotation fournie par un dispositif d'entraînement (2) mécanique est commandée et réglée par un capteur de charge (6), le référentiel de la puissance ou de la vitesse de rotation par le capteur de charge (6) étant défini en fonction d'une pompe d'extinction couplée mécaniquement au dispositif d'entraînement (2) ou pouvant être déterminé par l'intermédiaire de celui-ci, en outre, un générateur (10), non intégré dans le réglage ou la commande de la vitesse de rotation du dispositif d'entraînement, étant actionné par le dispositif d'entraînement (2) couplé mécaniquement audit générateur, et l'énergie électrique générée au niveau du générateur (10) est acheminée vers un circuit (15) électronique, un paramètre électrique de l'énergie acheminée, tel que la tension, le courant, la fréquence, étant réglé avec le circuit (15) électronique, et l'énergie est mise à disposition du côté sortie du circuit (15) électronique, qui peut être relié à un ou plusieurs consommateurs (11) électriques, de telle sorte que les consommateurs (11) électriques, en cas de fluctuations des paramètres électriques fournis par le générateur (10), sont alimentés avec un flux d'énergie constant ou pouvant être commandé et réglé.

10. Procédé selon la revendication 9, **caractérisé en ce que** le procédé est mis en oeuvre avec le système d'entraînement (1) de l'autopompe selon l'une quelconque des revendications 1 à 8.
